Europäisches Patentamt

European Patent Office

Office européen des brevets

(11) Publication number: 0 394 019
A2

# EUROPEAN PATENT APPLICATION

(21) Application number: 90304163.0

(51) Int. Cl.⁵: G06F 15/40

(22) Date of filing: 18.04.90

(30) Priority: 20.04.89 GB 8908999

(43) Date of publication of application:
24.10.90 Bulletin 90/43

(84) Designated Contracting States:
AT BE CH DE DK ES FR GB GR IT LI LU NL SE

(71) Applicant: CROFTLANDS LIMITED
Westaway Chambers, 39 Don Street
Jersey, St Helier, Channel Islands(GB)

(72) Inventor: Dickerson, John
Flat 3, 4 Green Street, Mayfair
London, W1Y 3RG(GB)

(74) Representative: Beresford, Keith Denis Lewis
et al
BERESFORD & Co. 2-5 Warwick Court High
Holborn
London WC1R 5DJ(GB)

(54) Computerised database system.

(57) A communications package 25 is provided, e.g. for use with the IBM IMS transaction manager 17 and DB2 database manager 19. The communications package appears to the IMS transaction manager to be an associated resource manager, and it participates in 2-phase commit procedures involving both the IMS transaction manager and the DB2 database manager. The communications package receives copies of update statements applied to the DB2 database manager, and transmits them off-site before the updates are committed to the database.

The communications package 25 may be used in a contingency arrangement in which a second IMS transaction manager 49 and a second DB2 database manager 51 maintain copies at a back-up site 13 of the databases at the main site 11. The update statements are transmitted by the communications package 25 to a tracking program 29, which logs them in a log 37. The logged update statements are used by an apply program 45 to update the copy databases.

Fig.1.

## COMPUTERISED DATABASE SYSTEM

The present invention relates to computerised database systems. Such systems are well known and are widely used for storing large amounts of data in an organised manner for subsequent retrieval. In many cases, there will be a continuing need to add new items of data, delete old items and to vary existing items. For example, if an organisation maintains details of all its employees on a computerised database, it will need to add and delete information as employees join and leave the organisation, and will need to alter existing information for example to record pay rises. There may also be a need to correlate different items of data. For example, in order to identify those employees exposed to a risk from a hazardous material, it may be necessary first to identify those sites within the organisation at which this material is handled, and then identify the employees who work at the identified sites.

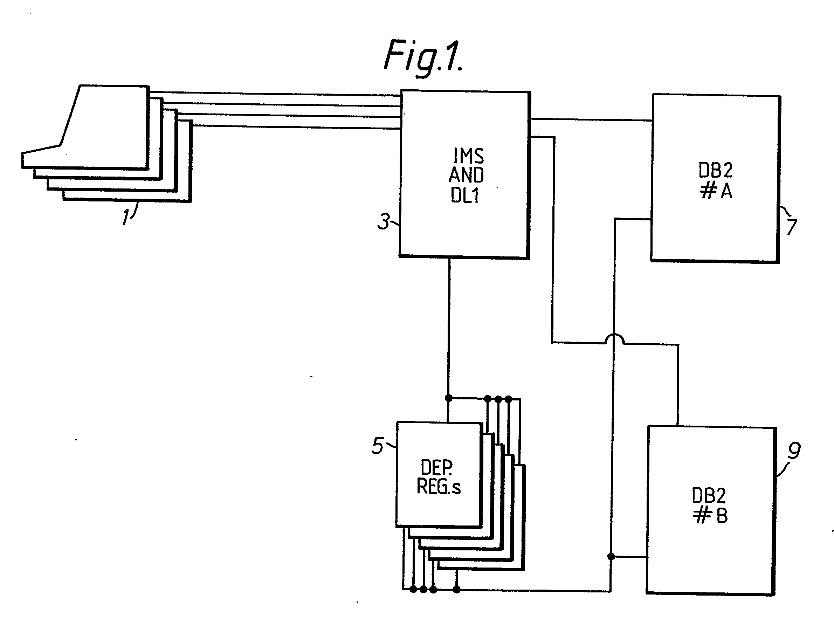

Figure 1 illustrates a known computerised database system. This system has been constructed using the IMS/DL1 and DB2 programs provided by the IBM organisation. "IMS", "DL1", and "DB2" are trade marks of the IBM organisation.

In the arrangement shown in Figure 1 a main frame computer such as an IBM 370 will contain IMS/DL1, and two copies of DB2. It should be noted that these are all computer programs, which will typically be running simultaneously within the same computer, with control of the computer being passed from program to program in accordance with the inputs to the computer and the protocols defined in the programs. DB2 provides a database management system which responds to calls to carry out operations on its database. As is illustrated in Figure 1, this program is a separate and autonomous unit within the computer. DL1 is also a database management system, but DL1 is an integral part of IMS and does not exist separately from it. IMS is a transaction manager.

In operation, users can access the databases through terminals 1 connected to the computer. In a typical database system there may be several thousand terminals which are able to access the database system. Messages from the terminals 1, when received by the main frame computer, are provided to the IMS program 3. Each message defines a transaction to be carried out in the database system. The processing of the transaction is performed in one of a plurality of dependent regions 5 which are created in the computer by means of IMS. The dependent regions 5 are associated with a program library (not shown), which contains a store of programs used for performing operations on the databases in the system.

The manner in which a transaction is processed will now be described in outline. The description simplifies the actual manner of operation, but those skilled in the art will be familiar with the detailed operation.

When a message is received by IMS 3, it identifies the type of transaction instructed by the message. IMS 3 then identifies an idle dependent region 5, and passes it the transaction with an instruction to load from the program library the program appropriate to process the transaction. By means of the program loaded into it, the dependent region identifies the database operations which are required to be carried out in order to perform the transaction. Typically, a transaction will require a number of database operations to be carried out in order, each database operation typically being a read operation in which data is read from one or more locations in a database, and an update operation in which the contents of a database are updated by altering one or more items of data or writing in new items of data.

To take an example where a database is used in a financial organisation such as a bank, the transaction might instruct that for all accounts in a predetermined group, the account holder's name and the current balance is to be read from the database, to be provided to the terminal originating the message for display on its screen, and additionally for all accounts within the predetermined group which have a balance greater than a certain figure the balance is to be increased by a first percentage, while for all remaining accounts within the group the balance is to be increased by a second percentage, and the new balances are to be read for each of the accounts and also provided to the terminal for display. In processing such a transaction, the dependent region would first make a call to the database management system controlling the database on which the relevant account information is stored, i.e. DL1 in IMS 3, the A copy 7 of DB2 or the B copy 9 of DB2. The call would instruct the database management system to read the appropriate entries in the database and return them to the dependent region. The call procedure would also notify IMS 3 that the relevant database management system had been called. Following the completion of the call and a successful return to the dependent region 5, the dependent region would make a second call to the database management system, instructing it to update by the first percentage all accounts within the predetermined group having balances above the predetermined level. After completion of this call, the dependent region would issue a third call to the database management system instructing it to update by the second predetermined percentage all accounts within the predetermined group having a balance not greater than the predetermined amount. The second and third calls could be structured so that the database management system returned the new balances to dependent region 5 at the end of each call, or alternatively the dependent region 5 could issue a fourth call separately to read the new balances.

When all the database operations required to carry out the transaction have been performed, the dependent region 5 sends a reply message to IMS 3, for onward transmission to the terminal 1, and then notifies IMS 3 that it has finished processing.

The different programs in the database system communicate with each other by means of shared memory space and by passing control between them, for example by using cross memory transfers in IBM MVS. A call from a dependent region 5 to a database management system will include a list of parameters to be used in the database management system, in a manner similar to a parameter list included in a call statement calling a sub-routine in simpler types of program. The return statement from the database management system to the dependent region 5 will also include a parameter list. Thus, the programs can communicate with each other by means of the values included in the parameter list. Additionally, the parameters in the parameter lists are not necessarily data values, but may be pointers to memory locations which are shared between the two programs. Thus, data placed in this memory region by one of the programs can be read by the other.

When a database management system receives a call from a dependent region, it may place a lock on the resources used in the call. There may be different levels of lock available. Typically, a 'read' call, asking for data to be read from the database, will result in a read lock being placed on the relevant position of the database. The read lock prevents other dependent regions from reading from the locked position or updating it. The read lock may be released once the read call is completed and the dependent region in question has sought access to another part of the database. That is to say, the read lock only exists while the dependent region 'has position' on the locked portion of the database. In some database management systems, an alternative type of read lock is available, which is maintained even while the dependent region accesses other parts of the database. This enables the dependent region to ensure that the contents of the portion do not change, through updating by another dependent region, if the first dependent region needs to be sure of this for correct processing of the transaction.

An 'update' call, instructing the contents of the database to be updated, will result in an update lock. This will exclude all other dependent regions from any access to relevant portion of the database (except in the case of 'read without integrity' as discussed below). An update operation cannot proceed, and an update lock cannot be obtained, if any other dependent region has either a read lock or an update lock on the relevant resources. An update lock will typically be maintained until the end of all processing for the transaction involved, i.e. until a 'commit' procedure as described below. The update lock avoids the possibility of processing in another dependent region being disrupted by reading and using a value which is being altered by the update operation.

In some database management systems, notably DL1, a 'read without integrity' operation is available. This is a read operation which does not require the read data to remain constant during subsequent processing, and so it is permitted to read from a portion of the database on which there is an update lock.

The details of the locking arrangements vary from one database manager to another, but they all serve the function of maintaining orderly access by the various dependent regions to portions of the database, and preventing the processing in one dependent region from disrupting the correct processing in the others.

In addition to locking the resources, the database management system will perform the operation instructed by the call, and return control to the dependent region 5, including providing any values instructed to be read from the database by the call. If the call requires the updating of any of the contents of the database, the update value may not be written into the database immediately, overwriting the old value, even though the database management system informs the dependent region 5 that the update has been performed. The update value may instead be stored temporarily in a buffer. Alternatively, the database is overwritten, but in this case the old value is stored temporarily in a buffer. In either case, the database management system ensures that both the old value and the update value are available to it.

When a dependent region 5 informs IMS 3 that it has finished processing a transaction, either by asking for another message or by issuing a sync point or check point request, IMS 3 performs a "commit" operation. In a system configured as illustrated in Figure 1, using IMS as a transaction manager, the commit process will normally be carried out in two phases. In the first phase, IMS provides a "commit prepare" instruction to each one of the database management systems 7, 9 and DL1 (and any other resource managers) which have been involved in the transaction being committed. IMS 3 knows which resource management systems have been involved, as it is notified whenever a resource management system is called for the first time in the processing of a transaction. Each database management system involved in a commit process writes to disk all relevant data from its buffer on receipt of the "commit prepare" instruction, and ensures that it is ready and able to overwrite all relevant portions of its database with the updated values (if they have not already been overwritten).

IMS then requests each associated program participating in the commit in turn to provide a vote response. Each program will vote "yes" if its preparations to commit have been successful, and votes "no" if for any reason it is unable to continue with the commit process. If any of the votes received by IMS 3 are "no", the commit process is abandoned and the entire operations involved in processing the relevant transaction are discarded or backed out, so as to return the system to a state as if the transaction had never been processed at all. If all votes are "yes", IMS 3 issues a "commit continue" instruction. On receipt of this instruction, the values stored in the databases are overwritten with the updated values, if they have been buffered rather than previously written to the database. After the update values have been written to the database, any remaining locks are removed.

If the commit process is unsuccessful, because one of the participating managers voted "no", the update values are not written into the database, or if update values have already been written they are overwritten again by the old values which have been buffered. In this way, the database management system ensures that following an unsuccessful commit, the database is placed in a state as if the relevant transaction had never been processed. Once this has been done, in an unsuccessful commit, any remaining locks are removed.

The above description of locks and commit is generally true of most database management systems, but it should be borne in mind that different systems operate in different ways, and may not always follow the above description in every detail. However, locks will always be designed so as to protect the integrity of the processing on one dependent region from the effects of updates instructed by other dependent regions, and the commit process will always ensure that following completion of the commit all relevant update values are written to the database, or alternatively all relevant old values are stored in the database, depending on whether the commit is successful or not.

Only after the successful completion of the commit process, is the reply message passed back from IMS 3 to the originating terminal 1. The time at which a commit procedure is carried out is also known as a synchronisation time, and the period between successive commit procedures, in which a transaction is being processed by dependent region 5, is known as a sync interval.

The prior art arrangement shown in Figure 1 is only one of many possible arrangements. For example, a two-phase commit procedure has been described. Systems may also have a commit procedure having more than two phases. A one-phase commit procedure is possible, but is not suitable for systems with more than one resource manager.

The abilities of the IMS program have been varied in different versions of the program. Originally, IMS could only handle transactions intended for its associated DL1 and Fastpath databases. More recently, IMS has been modified so that it may be run in association with one or more separate resource managers such as the DB2 database manager, permitting configurations as shown in Figure 1. When this facility was introduced to IMS, it included the limitation that only one resource manager external to IMS/DL1 could be involved in any given sync interval. However, it has now been proposed to provide a further modification of IMS in which this restriction is relaxed.

In practice, database systems such as that illustrated in Figure 1 are not always entirely satisfactory.

A first problem arises when the database system ceases to function, or functions incorrectly, for any reason. This could happen for a variety of reasons, such as hardware failure in the computer on which the system is being run, a software error, power supply failure, industrial action at the site where the computer is located, or a catastrophe resulting in the destruction of or damage to the computer.

It is known to "back-up" data stored in the computer. This involves periodically making a copy of the data, and removing the copy to a safe place. In most database systems, this is not a practical operation, as the volume of data stored means that the backing-up operation takes longer than is acceptable for practical operation of the system. As an alternative, it is possible to construct a second database, containing the same information as the original database or containing a predetermined sub-set of that information which it is desired to protect. Details of changes made to the original database may be stored, and periodically these changes may be applied to the back-up database.

A system is also known in which two databases have the same information stored on them at an initial time, and both of these databases participate in transactions which alter the data stored on the database, and a notification system is provided so that each database notifies the other from time to time of the changes which have been made to it. The database manager of the other database then applies the same changes to its database. It is a characteristic of this system that the changes are not necessarily applied to the two databases in the same order or "commit sequence".

None of the systems described above provides complete protection of a database system against contingencies which might disrupt its operation. It is always possible for the database system to undergo an abrupt and unanticipated shut down, at which time the database might contain changes to its data which had not been notified to any back-up or partner system. Accordingly, when such an abrupt shut down occurs, there is no guarantee that the back-up or partner system contains a correct copy of the original database. In some types of business operation, it is essential that data processing can continue even after the complete shut down of a database, with a guarantee that at least data in certain essential categories is mirrored on a back-up system with guaranteed completeness and accuracy.

According to one aspect of the present invention, there is provided a method of operating a computerised database system in which data defining a copy of at least a predetermined part of the database or enabling a copy of at least a predetermined part of the database to be made is stored at a location, or jointly at a plurality of locations, physically remote from the database and is updated no later than the time when a corresponding change is made to the database.

According to another aspect of the present invention, there is provided a database system in which data defining changes to a database is transmitted out of the system, so as to enable an up to date copy of at least a predetermined part of the database to be maintained outside the system, and in which the operation of transmitting the data out of the system participates in a multi-phase commit procedure and transmits the data out of the system no later than the completion of the commit operation. Preferably, the data is transmitted out of the system before the system enters the final phase of the commit process.

Because the operation of data transmission participates in the commit process, the commit process can be aborted if the data transmission operation fails for any reason, and if the commit process is aborted for any other reason, this fact is immediately available to whatever other system is receiving the transmitted data. In this way, the data receiving system knows immediately at the termination of the commit process whether or not the transmitted changes have been committed, and also a guarantee may be provided that all changes to at least the predetermined subset of data in the database have been transmitted out of the system. In this way, it is possible to construct a system to receive the data defining the changes in such a manner that it is always guaranteed that a correct and up to date list of changes made to the database is stored by the other system.

It is possible to define different 'classes of service' for different sub-sets of the database, and provide different levels of guarantee for them. It is also possible to provide a primary remote system for receiving the transmitted data and also an alternative remote system. These two options can be combined to provide an arrangement such as the following. For class 1 data, if the transmission of the data to the primary remote system is unsuccessful, the commit process is aborted. For class 2 data, if the transmission of the data to the primary remote system is unsuccessful, an attempt is made to transmit the data to the alternative remote system, and the commit process is only aborted if this attempt is also unsuccessful. For class 3 data, the commit process is not aborted even if the data cannot be transmitted to either the primary remote system or the alternative remote system, but in this case the class 3 data is stored locally and transmitted once this becomes possible again.

The degree of contingency protection provided by the database system described above will depend on the location of the other system which receives the data defining changes. It will normally be necessary for the other system to be run on a different computer from the computer on which the original database system is run, and preferably the other computer has an independent power supply and is physically spaced from the first computer. The second computer may be in a different building from the first computer, and is preferably at least 100 metres from the first computer. More preferably the second computer is at least 1000 metres from the first computer, and most preferably is at least 10 km away or even at least 100 km away.

A further problem which arises in the prior art relates to difficulties in communication between different programs. These problems may arise either within a database system if it is a distributed database system, or where communication is required between two separate database systems.

Most proposals which have been made so far for distributed database systems anticipate the use of specially designed database management programs, which will be able to communicate with other database management programs so as to provide a distributed database. However, such programs will normally only be able to communicate with other identical database management programs.

Existing transaction management programs and database management programs normally have very restricted capabilities for communicating with other database management (or other resource management) programs. Many databases already exist using these existing programs. Users may wish to be able to integrate existing databases either with each other, or with new distributed databases. For instance, it may be convenient for a number of existing databases to be combined to form a single distributed database, or it may be convenient to permit a terminal connected to a first transaction manager to access data on a database which is driven by a different transaction manager. For historical reasons, the different database management systems and the different transaction managers used for different databases within the same organisation may be entirely incompatable with each other and unable to communicate with each other. This will tend to frustrate the desires of the organisation to rearrange their databases so as to be more flexible or more integrated.

According to a third aspect of the present invention, there is provided a database system having a transaction manager and a function which appears to the transaction manager to be a resource manager and which is in fact a communications function. Preferably, the communications functions does not contain a database management system. The transaction manager may or may not drive associated database management systems. The communications function will typically appear to the transaction manager to be a database management system.

Because the communications function is configured so as to appear to the transaction manager to be a resource manager, it is able to participate in the internal operations of the database system, and can receive messages from the transaction manager and provide messages to it, and can participate in data handling operations, possibly through dependent regions. Thus, the communications function can receive messages which are formatted as data read or write instructions addressed to a database management system within the database system, but can then transmit these messages out of the database system. The messages may be transmitted in a protocol suitable for reception by a remote database system. A widely used protocol such as OSI or LU6.2 may be used.

An equivalent communications function may be provided in the other database system, and the communications protocol is chosen so as to permit the two communications functions to communicate with each other. The two database systems may be entirely different and incompatible, but are nevertheless enabled to communicate because the communications functions in each database system are configured so as to appear to be resource managers of types which are permitted to exist within the respective database systems.

According to a fourth aspect of the present invention, there is provided a distributed database system having more than one transaction manager, in which a first transaction manager drives a respective database management system directly, and a communications function is provided to allow a second transaction manager to communicate with the database management system of the first transaction manager via the communications function so as to permit the second transaction manager to request an operation in the database management system and receive a reply within the same sync interval. The second transaction manager may also drive a respective database management system directly, and in this case the two database management systems may either be identical or be different from each other.

According to a fifth aspect of the present invention, there is provided a distributed database system having more than one transaction manager, in which a first transaction manager drives a respective database management system directly, and a communications function is provided to allow a second transaction manager, which is not identical to the first, to communicate with the database management system of the first transaction manager via the communications function.

According to a sixth aspect of the present invention, there is provided a database system having a transaction manager and a communications function which communicates outside the database system using a protocol which defines database operations in logical terms so as to permit an operation specified using the protocol to be applied to more than one type of database management system. The protocol could be a version of SQL (Structured Query Language).

According to a seventh aspect of the present invention, there is provided a database system comprising a transaction manager and a function which appears to the transaction manager to be a resource manager, the function managing remote resources.

Embodiments of the present invention may be used to provide communication between sites in a distributed database system, to allow common access to a database by a plurality of transaction managers, which may be incompatible with each other, and to allow a transaction manager to drive directly or indirectly a plurality of database management systems which may be incompatible with each other or with the transaction manager.

Embodiments of the present invention may also allow mirror site working in a replicated database arrangement. This is an arrangement in which databases at different sites hold the same data, as in a contingency system, but with the databases at both sites being available for access by terminals.

In this arrangement, a communications system is provided which copies to the other site calls made to resource managers at its local site. The communications function also receives similar incoming information from the other site. Whenever a resource such as a part of a database is accessed during a sync interval, a lock will be placed on both copies of that resource (one copy at each site). A communications function local to the transaction manager will participate in the commit process with that transaction manager so as to guarantee that any update information is transmitted out of that site by the time that commit takes place. The transmitted update information is used to update the database at the other site so as to maintain the two databases identical. The second database will normally be updated by a commit process at the second site which is separate from the commit process of the first site. However, the two databases will always remain identical for practical purposes as the locks on the data at the second site will not be released until its commit process is completed, so that no terminal will ever be able to obtain differing information from the two databases.

In many embodiments of the present invention, it will be found useful to allocate database transactions densely ascending or descending transaction numbers which enable the communications function to ensure that transactions being applied to a database via the communications function are applied in the correct order.

Where reference has been made to maintaining copies of a database and data defining changes in a database, this also covers the case where these operations are carried out with respect only to a predetermined portion of the data of the database and not to the entirety of the database.

Embodiments of the present invention, given by way of example, will now be described with reference to the accompanying drawings, in which:

Figure 1 shows schematically a prior art database system;

Figure 2 shows schematically a first embodiment of the present invention;

Figure 3 shows schematically a second embodiment of the present invention;

Figure 4 is a flow diagram showing the interaction between a dependent region and the contingency system at the production site in the embodiments of Figures 2 and 3;

Figures 5a, 5b and 5c show schematically the processing of a transaction at the production site of the embodiments of Figures 2 and 3;

Figures 6a and 6b show schematically the application of a transaction at the back-up site in the embodiments of Figures 2 and 3;

Figure 7 shows schematically the parallel application of transactions at the back-up site in the embodiments of Figures 2 and 3; and

Figure 8 shows schematically a third embodiment of the present invention.

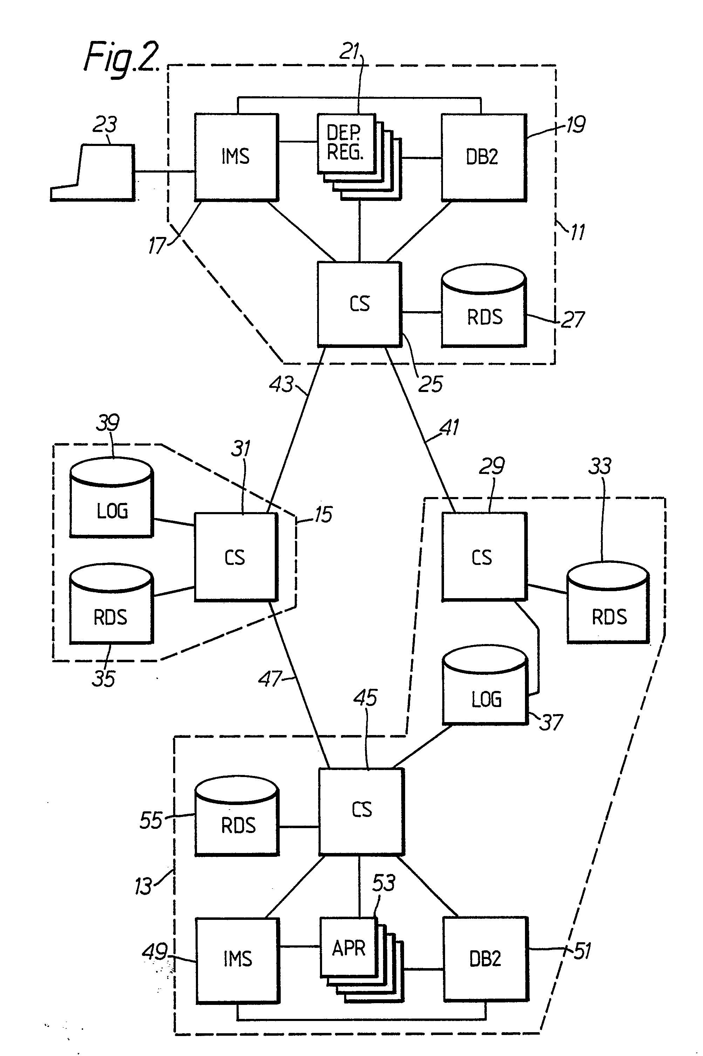

In the embodiment of Figure 2, the present invention is applied to a contingency arrangement which provides back-up for a computerised database. The arrangement is distributed between three different sites. The database system which is being protected from contingencies is located at a production site 11. The back-up operations are provided at a back-up site 13, which is preferably at least 10 km or even more than 1000 km away. There is also a tracking site 15, which may be remote from both of the production site 11 and the back-up site 15.

At the production site 11, the database system comprises an IMS/DL1 program 17, acting as a transaction manager and a database manager, a DB2 program 19 providing a further database manager as a resource manager associated with IMS 17, and a plurality of dependent regions 21 which are used by the IMS transaction manager 17 to drive the DB2 database manager 19. Users can access the database system through a plurality of terminals 23. In the arrangement so far described, the production site database system resembles the prior art system of Figure 1.

A contingency system 25, which incorporates a communications function, is also provided within the database system at the production site 11. The contingency system resembles a further resource manager associated with the IMS transaction manager 17, and is treated as such by the transaction manager. Associated with the contingency system 25 is a non-volatile data store 27, known as the Restart Data Set or RDS. The RDS 27 may be a designated portion of a non-volatile store associated with the computer at the production site 11, which non-volatile store is also used for other purposes.

A contingency system tracking program 29 is provided at the back-up site 13. A further contingency system tracking program 31 is provided at the tracking site 15. Each of the contingency system tracking programs 29, 31 is associated with a respective RDS store 33, 35 and also with a respective log store 37, 39. Each of RDS 33, RDS 35, Log 37 and Log 39 is a non-volatile storage area. The contingency system program 25 at the production site 11 is in communication with both of the tracking programs 29, 31, through separate communications channels 41, 43.

13          EP 0 394 019 A2          14

## Operation at the Production Site

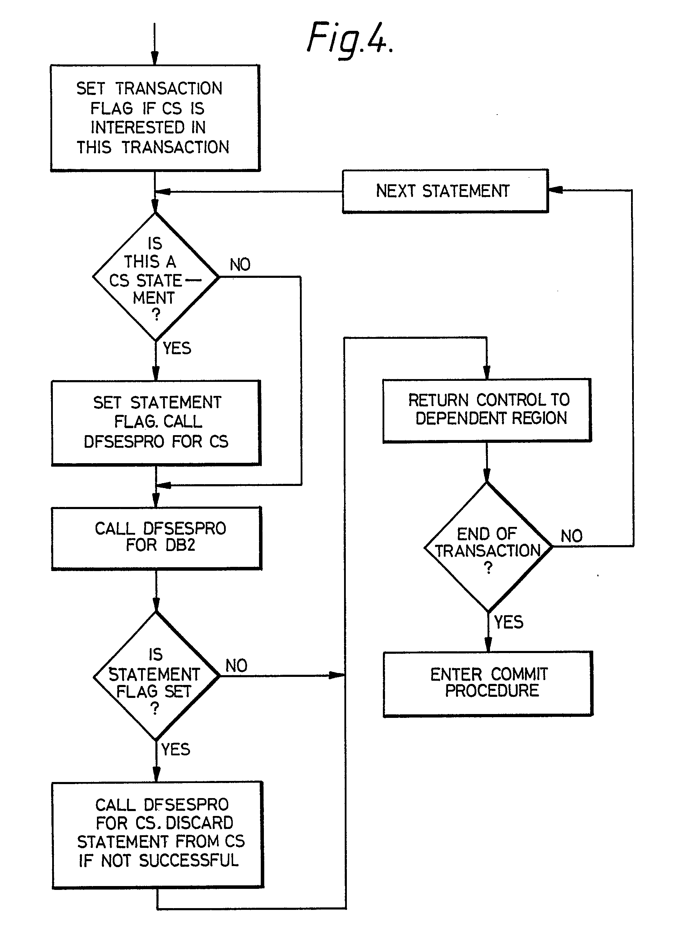

When a message is received by the IMS transaction manager 17 at the production site 11 from a terminal 23, it instructs an idle dependent region 21 to load an appropriate program from the program library (not shown) and passes the transaction to the dependent region 21 for processing, in the manner described with reference to Figure 1. However, the dependent region 21 is adapted so that in processing a transaction it calls exit routines which have been specially written to control the interaction between the dependent regions 21 and the contingency system 25. The interaction between the dependent regions 21 and the contingency system 25 is illustrated in outline in the flow diagram of Figure 4. The precise nature of the exit routines is not given, since this will vary depending on the precise nature of other aspects of the system, and persons skilled in the art who are familiar with the IBM IMS and DB2 programs will understand how to create the necessary routines.

When a dependent region receives a transaction for processing from the IMS transaction manager 17, it first tests to discover whether the transaction is of a type in which the contingency system 25 is interested. This may be done by comparing the transaction type against a table of transaction types provided by the contingency system 25. If the contingency system is interested in the transaction, this is recorded, e.g. a flag (the transaction flag) is set.

When each statement in a transaction is processed, it is first determined whether it is a statement which should be notified to the contingency system 25. The flag previously mentioned is inspected. If this is not set, the statement cannot be of interest since the entire transaction is not of interest. If the flag is set, the nature of the statement is considered. Even in a transaction of a type in which the contingency system 25 is interested, not all statements are necessarily required to be notified to the contingency system 25. A statement which only requires database read operations will not alter the data stored in the database, and therefore need not be communicated to the back-up site 13. However, a statement which updates the database must be notified to the contingency system program 25.

If the statement is one which should be notified to the contingency system 25, this is recorded, e.g. a further flag (the statement flag) is set, and a call is made to DFSESPRO for the contingency system 25 as a resource manager. DFSESPRO is a subsystem invocation module, provided in IMS-based systems as a facility to allow a Dependent Region to invoke a resource manager. This causes the contingency system 25 to record the statement on its associated RDS 27. Additionally, the first time the contingency system 25 is called in the processing of a transaction, the call notifies the contingency system program 25 of the transaction which the dependent region 21 is processing, and the transaction will be given a transaction number in a densely ascending or descending series.

By a densely ascending or descending series, is meant a series of numbers in which there are no gaps between adjacent numbers. These transaction numbers are used by the various contingency system programs to ensure correct processing of transactions, and in particular to ensure that transactions are applied in the back-up site 13 in the correct order.

The contingency system 25 records the updates without processing them except in one respect. The dependent regions 21 and the DB2 database manager 19 have access to each other's memory locations. Typically a call to the DB2 database manager 19 will not specify addresses directly, but will instead contain a pointer to such a common memory location. The actual address to be used by the DB2 database manager 19 will be stored at the memory location pointed to. Since the back-up site 13 does not have access to these memory locations, and additionally the address information stored at these locations varies from time to time, it is necessary for the contingency system 25 to access any memory location pointed to in an update statement, and replace the pointer with the actual address read from the respective memory location.

Following the call to the contengency system 25, or if the transaction is not of a type in which the contingency system 25 is interested, DFSESPRO is called for the DB2 database manager 19 as an associated resource manager. This causes the statement to be applied to the DB2 database manager 19 in the normal way.

When DFSESPRO is called for the first time in a sync interval in respect of a resource manager, this is notified to the IMS transaction manager program 17, and the IMS transaction manager 17 uses these notifications to determine which associated resource managers are to participate in the commit process at the end of the sync interval. In this way, the participation of the contingency system program 25 and the DB2 database manager 19 in the commit process is guaranteed where it is appropriate.

Following the call to the DB2 database manager 19, the statement flag is tested to determine whether the contingency system 25 is interested in the statement. If it is not, control is returned to the dependent region 21. Otherwise, a further DFSESPRO call is made to the contingency system 25. This enables the contingency system 25 to

8

inspect the return codes provided by the DB2 database manager 19, to check that the statement was processed successfully. If it was not processed successfully, it is deleted again from the RDS 27. Control is then returned to the dependent region 21.

The dependent region 21 processes the values returned by the DB2 database manager 19 in the normal way. It then moves on to the next statement in the transaction, and begins to process it. Before any calls are made, it is first determined whether the statement is one in which the contingency system 25 is interested. If it is, the statement flag is set. The above procedure is repeated from that point. The statements are processed in this manner until the end of the transaction is reached, at which point the dependent region 21 requests the IMS transaction manager 17 to perform a commit procedure.

Figure 4 and the above description relate to the processing of transaction statements which require calls to the DB2 database manager 19. Calls to the DL1 database manager associated with the IMS transaction manager 17 will be processed in a corresponding manner.

In the commit procedure, the contingency system 25 at the production site 11 ensures that all updates from the transaction being committed are stored on the log 37 at the back-up site 13 or the log 39 at the tracking site 15. When an update is initially notified to the contingency system 25, it is stored on the RDS 27 associated with it. The RDS 27 mirrors working buffer memories used by the contingency system program 25 at the production site. It contains in non-volatile storage all information necessary to re-start the contingency system program 25 after it had been stopped, and return it to the state it was in immediately before it was stopped.

During the commit process, the production site contingency system 25 will remove from its RDS 27 data relating to all updates being committed and will transmit these over the communication channel 41 to the contingency system tracking program 29 at the back-up site 13. Additionally, if the working buffers used by the production site contingency system 25 become full during the processing of a transaction, updates will be removed from the buffers and the associated RDS 27 and transmitted over the communication channel 41 to the contingency system tracking program 29 at the back-up site 13, where they will be stored in the RDS 33. Thus, during a commit process updates may be moved from RDS 27 and RDS 33 onto log 37. In this way the contingency system tracking program 29 tracks the operation of the production site 11.

If the production site contingency system program 25 is unable to transmit data successfully to the tracking program 29 at the back-up site 13, either owing to a failure at the back-up site 13 or because of failure in the communication channel 41, the contingency system 25 at the production site 11 automatically switches the tracking function to the contingency system tracking program 31 at the tracking site 15. When communication with the back-up site 13 is restored, the operator at the production site can decide whether to continue tracking at the tracking site 15 or to return to tracking at the back-up site 13.

The transaction numbers referred to above are also stored on the logs 37, 39 in association with the relevant update statements.

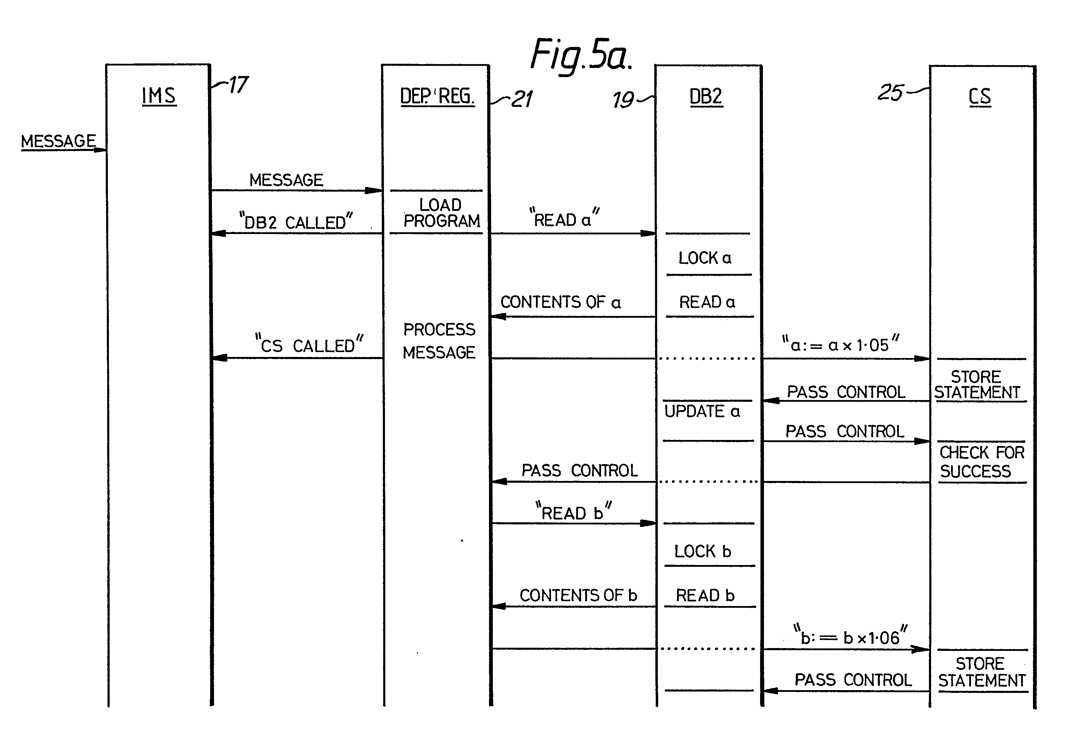

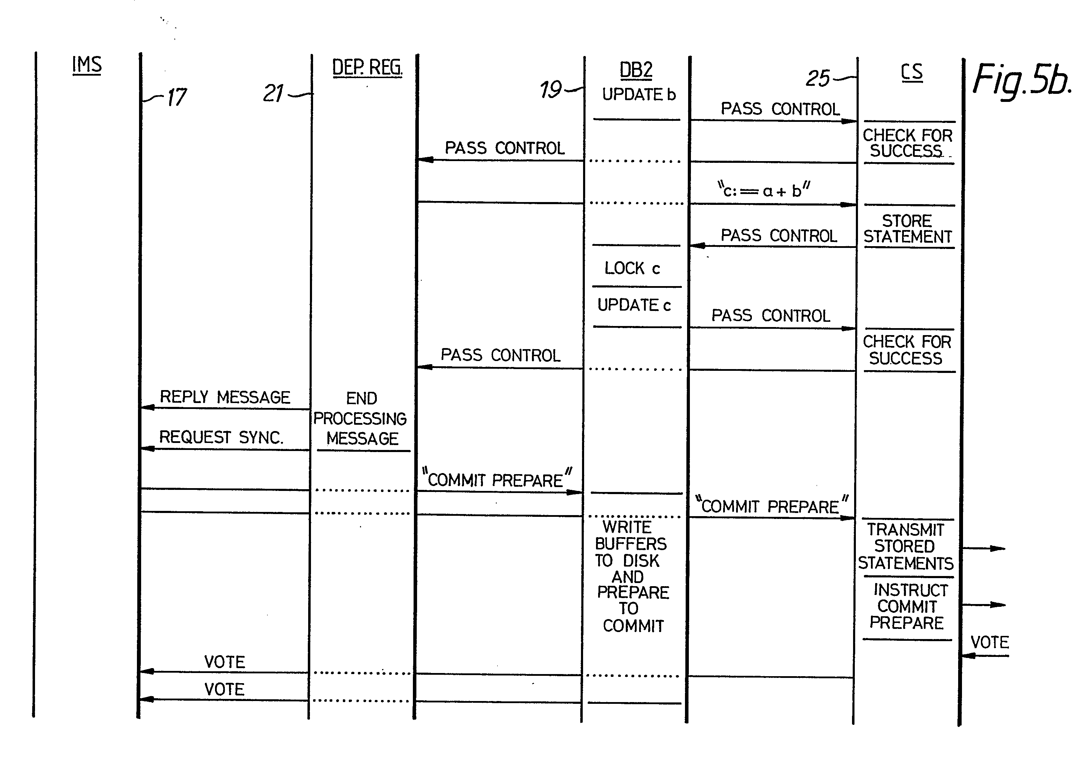

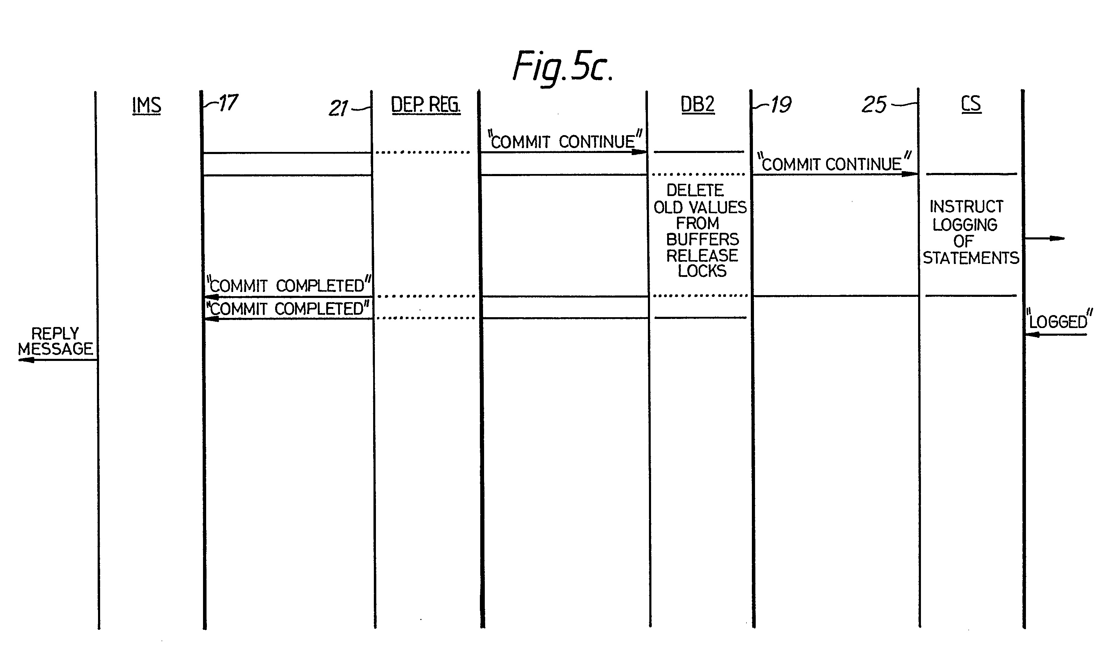

An example of the processing of a very simple transaction will now be described with reference to Figure 5. Figure 5 appears in three parts, 5a, 5b and 5c. Figure 5b is a continuation from the bottom of Figure 5a and Figure 5c is a continuation from the bottom of Figure 5b. In Figure 5, the passage of time is represented by vertical movement in the downward direction.

A message is received by the IMS transaction manager 17 from a terminal 23. It selects an idle dependent region 21 and transmits the message to the dependent region 21 for processing with an instruction to load the relevant program from the program library. The message requires the dependent region to read the values of two locations in the database controlled by the DB2 database manager 19, update the values by respective factors which depend on the magnitude of the values read, and stored the sum of the updated values in a third location.

First, the dependent region 21 issues an instruction to the DB2 database manager 19 to read location a. The dependent region also notifies the IMS transaction manager 17 that DB2 has been called, so as to ensure that DB2 will participate in the commit process for this transaction. The DB2 database manager 19 places a lock on the store location a, so that it is not available to other dependent regions. Then it reads the value stored in the database at location a and returns the stored value to the dependent region 21. In practice, the DB2 database manager 19 does not place a lock on a single store location, but will place a lock on the "page" (4 kbytes of data) comprising store location a.

In view of the value returned for location a, the dependent region 21 determines that it should be updated by a factor of 1.05. It notifies the contingency system 25 of the update statement, and informs the IMS transaction manager 17 that the contingency system 25 has been called. The contingency system 25 stores the update statement on its RDS 27. The statement is notified to the DB2 database manager 19, which computes the new value for storage location a and stores the new value in location a. The old value is retained in a buffer in case it is needed following an unsuccessful commit.

The contingency system 25 is then called again, so that it can check that the DB2 database management system 19 has processed the statement successfully, and if not the contingency system 25 removes the statement from its RDS 27.

The contents of storage location b are read and updated in a similar manner. It should be noted that it is only necessary to inform the IMS transaction manager 17 that the DB2 database manager 19 and the contingency system 25 have been called on the first occassion that the respective resource manager is called.

Next, the dependent region 21 sends to the DB2 database manager 19 and the contingency system 25 the update statement that the sum of the new values of a and b are to be stored at location c. Following processing of this statement, the processing of the message is completed, and the dependent region sends a reply message to the IMS transaction manager 17 for onward transmission to the originating terminal 23. At this moment, the three update statements (but not the two read statements) have been stored on the RDS 27 associated with production site contingency system 25, and the DB2 database manager 19 has computed the values for storage locations a, b and c and has placed locks on these storage locations. It has overwritten the old values stored in the database at these locations but retained the old values in a buffer.

Because the dependent region 21 has completed processing the message, it requests sync from the IMS transaction manager 17. This can be done by issuing a sync point statement, a check point statement or a request for a new message, depending on the nature of the program loaded into the dependent region 21 and the nature of the message which has been processed.

In response to the request for sync, the IMS transaction manager 17 begins a two phase commit procedure by issuing a "commit prepare" instruction to each resource manager which has participated in the transaction, i.e. to the DB2 database manager 19 and to the contingency system 25. The DB2 database manager 19 responds to the "commit prepare" instruction in the normal way.

On receipt of the "commit prepare" instruction, the contingency system 25 transmits all updates still stored on its RDS 27 to the current tracking program 29 or 31. It then sends a "commit prepare" instruction to the remote tracking program. The tracking program 29 or 31 at the remote site initially stores the transmitted updates on its respective RDS 33 or 35. When it receives the "commit prepare" instruction, it prepares to log the updates on the log 37 or 39. Once its preparations are complete, and it has ensured that it is ready and able to log, it provides a "yes" vote back to the contingency system at the production site 11. Following receipt of the "yes" vote from the remote contingency system, the production site contingency system 25 provides a "yes" vote to the IMS transaction manager 17. The DB2 database manager provides a vote in the normal way.

Provided that all votes received by the IMS transaction manager 17 are "yes", it enters the second phase of the commit procedure by issuing a "commit continue" command. On receipt of this command, the DB2 database manager deletes from its buffers the old values for the locations in the database being updated and releases the locks placed on those locations. It then notifies the IMS transaction manager 17 that the commit operation has been completed. The production site contingency program 25 responds to the "commit continue" instruction by transmitting an instruction to the remote contingency system tracking program to log the updates for the transaction in hand. Once this instruction has been transmitted, the production site contingency system 25 notifies the IMS transaction manager 17 that commit has been completed, without waiting for the remote contingency system tracking program to confirm that the updates have been logged.

If any of the systems participating in the commit procedure experience a problem when preparing to commit, the system concerned will vote "no" instead of "yes" to the commit. If this happens, a "commit abort" instruction is provided instead of the "commit continue" instruction, and the entire processing of the transaction concerned is backed out so as to return the database system to the state it would be in if the relevant message had never been processed. Therefore, if the DB2 database manager is unable to commit the updates in the database, the updates are not logged by the contingency system tracking programs. Similarly, if the production site contingency system 25 or the remote contingency system tracking program 29 or 31 experiences a problem, for instance there is a failure in the read mechanism of its RDS, the commit process is abandoned and the processing of the transaction is backed out. In this way, there is a guarantee in respect of any transaction of a type protected by the contingency arrangement, that no update will be committed to the database without it also being stored outside the production site 11 under the control of one of the contingency system programs.

Each contingency system tracking program 29, 31 does not delete update information from its associated RDS 33, 35 until that information has been successfully logged on the associated log 37, 39. If any problems arise in the logging operation, the relevant data remains stored on the appropriate RDS, and the production site contingency system program 25 can re-instruct the logging process. Because there is a guarantee that the update information is stored outside the production site by the time the contingency system 25 votes "yes" to commit, there is no need for the remote logging of the updates to be confirmed to the production site before the production site contingency system 25 confirms to the IMS transaction manager 17 that commit has been completed.

It is possible to define different classes of service to the production site contingency system 25. For a class 1 transaction, if the production site contingency system 25 cannot transmit the relevant data to the back-up site tracking program 29, or if the back-up site tracking program 29 votes "no" at commit, the production site contingency system 25 votes "no". For a class 2 transaction, under these circumstances the production site contingency system 25 attempts to transmit the data to the tracking site 15 instead, and only votes "no" if this is also unsuccessful or the tracking site tracking program 31 votes "no". For a class 3 transaction, the production site contingency system votes "yes" to commit even if it cannot transmit the data successfully to either tracking program, and simply stores the data on a non-volatile local store until data transmission becomes possible again.

It can be seen that the production site contingency system 25 appears to the IMS transaction manager 17 to be a resource manager which manages local resources, i.e. resources within the database system of the transaction manager 17. In fact, the production site contingency system 25 operates as a communications function, enabling data to be communicated out of the database system. Alternatively, the production site contingency system can be seen as acting as a resource management system for resources which are remote from the database system.

Tracking

As explained above, tracking is normally carried out at the back-up site 13, but can be carried out at a special tracking site 15 if any problems arise with the tracking operation at the back-up site.

In the tracking operation the contingency system tracking program 33 or 35 receives update statements and transaction numbers over the relevant communication channel 41 or 43 from the production site contingency system 25. The transaction numbers and update statements are initially stored in the associated RDS 33,35 and are transferred to the associated log 37 or 39 as part of the commit procedure at the production site 11. The updates logged on the logs 37,39 are used by a contingency system apply program 45 at the backup site 13 to update the backup databases.

The contingency system apply program 45 has direct access to the log 37 at the backup site 13. This is possible because the contingency system apply program 45 runs in the same computer as the backup site contingency system tracking program 29. However, in order to make updates stored on the log 39 at the tracking site 15 available to the contingency system apply program 45, these updates must be transmitted to the backup site 13. Accordingly, a further communication channel 47 is provided between these two sites and the tracking site contingency system tracking program 31 has a replay facility by which it transmits the contents of its log 39 to the contingency system apply program 45 over the communication channel 47.

Apply Processing at Backup Site

In the embodiment of Figure 2, the computer at the backup site used to maintain the backup database is also used for other functions. In order to make the maximum amount of computer processing time available for the other functions, updates are not applied to the backup databases at the same time as they are applied in the production site 11. Instead, the updates are stored on the logs 37,39 and are applied during a period when the backup site computer is not busy, such as during the middle of the night. This does not cause operational difficulties, since there is no access to the data stored on the backup databases except when a contingency occurs. When a contingency occurs, updates are immediately applied to the backup databases and for each class of data stored on the backup databases access is not permitted to the databases until all updates for that class of data have been applied.

During the apply process, the backup database system is configured as shown in Figure 2. The system comprises an IMS transaction manager 49 and a DB2 database manager 51 in addition to the contingency system apply program 45. The apply processing is carried out by a plurality of apply process regions (APRs) 53. The APRs 53 are regions created by the IMS transaction manager 49, and resemble the dependent regions 21 at the production site. However, the programs run in the APRs 53 tend to be simpler than the programs run in the dependent regions 21, as they have less processing to perform, and additionally they are constructed so that they can be driven by the contingency system apply program 45. The contingency system apply program 45 also has an associated RDS store 55.

The database controlled by the backup DB2 database manager 51. and also the database controlled by the DL1 database manager associated with the IMS transaction manager 49 if backup for this is provided, is updated by an apply process. In the apply process, the contingency system apply program 45 reads transactions from the backup site log 37 and despatches them in turn to an idle APR 53. Provided that the contingency arrangement has worked normally, the transactions should be stored in the log 37 in an unbroken sequence of densely ascending or descending transaction number. A break in this sequence will normally indicate that there was a failure of communication between the production site 11 and the backup site 13, and so the contingency system apply program 45 will then request the tracking site 15 to enter replay mode and provide the missing transactions from the tracking site log 39.

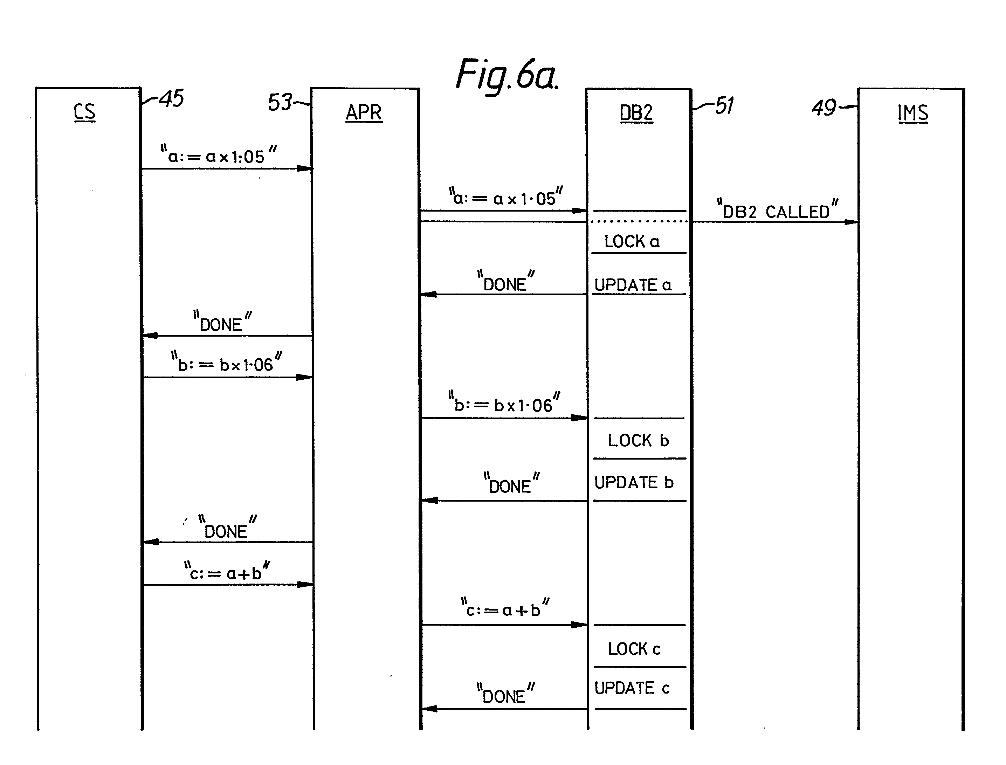

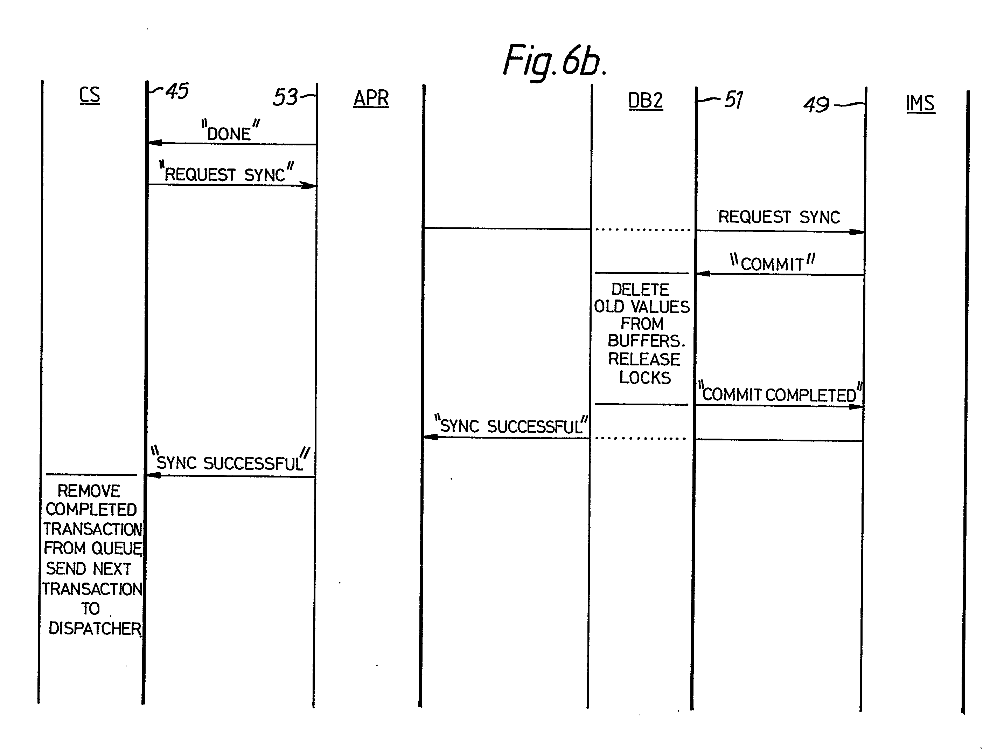

Figure 6 is a drawing similar to Figure 5, which illustrates the application to the backup DB2 database manager 51 of the update statements from the transaction process in Figure 5. Figure 6 is divided into Figure 6A and Figure 6B. Figure 6B is a continuation from the bottom of Figure 6A. As with Figure 5, time is represented by a vertical progression in the downward direction in Figure 6.

The contingency system apply program 45 includes a despatcher, which sends instructions to the APRs 53. When the transaction in question is provided to the despatcher, it selects an idle APR 53 and sends to it the first update statement of the transaction. The APR 53 applies the statement to the DB2 database manager 51, and also notifies the IMS transaction manager 49 that the DB2 database manager 51 has been called. The DB2 database manager 51 responds to the update message in the normal way. Since this message requires the contents of the database at storage location a to be updated, it places a lock on storage location a and computes the new value. Storage location a is overwritten with the new value, and the old value is buffered. When this has been done, it notifies the APR 53, which in turn notifies the contingency system apply program 45.

The contingency system apply program 45 then provides the next update message, updating the contents of database location b, to the APR 53. This is applied to the DB2 database manager 51 in the same manner, except that there is no need to repeat the notification to the IMS transaction manager 49 that the DB2 database manager 51 has been called. The third update message, instructing the updating of the contents of storage location c of the database, is processed in a corresponding manner. All the update messages for a given sync interval are applied to the same APR 53.

At this stage, all the update statements of this transaction have been applied, and the DB2 database manager 51 is in the same state as the production site DB2 database manager 19 was when the dependent region 21 had finished processing the corresponding original message. At this point, the contingency system apply program 45 instructs the APR 53 to request sync.

The APR 53 then requests sync from the IMS transaction manager 49. This instructs the DB2 database manager 51 to commit the updated values into the database. The DB2 database manager 51 deletes from its buffer the old values of the relevant locations, and releases the locks on those locations. It then notifies the IMS transaction manager 49 that commit has been completed, and the IMS transaction manager 49 notifies the APR 53 that sync has been successful. The APR 53 passes this message on to the contingency system apply program 45, which then removes the completed transaction from the queue of transactions waiting to be applied, and sends the next transaction from the queue to the despatcher.

Only a single phase commit is used when applying updates at the backup site 13. Since all the update statements of each transaction are logged in the contingency system arrangement, if any difficulty arises in either the application of a transaction or the commiting of the updates, the transaction can be backed out and then re-applied.

In the arrangement described above, where the updates from one 24-hour period at the production site 11 must be applied at the backup site 13 during a relatively short period, it is typically necessary for the contingency system apply program 45 to apply a plurality of transactions in parallel, using a plurality of APRs 53. However, if it is also to be guaranteed that the updates applied to the backup databases have the same effect on them as the original transactions had on the databases at the production site 11, it is necessary to control the order in which the transactions applied at the backup site 13 pass through sync point, i.e. the order in which the transactions are commited at this site.

This could be guaranteed by ensuring that all transactions pass through sync point precisely in transaction number order. However, this might not permit application of transactions to be fast enough. It could have the effect that one transaction, which was applied relatively quickly, is forced to wait before passing through sync point, while another transaction of earlier transaction number completes its application. The application of a transaction having a very large number of updates, so that its application takes a long time, could bring the application of all other transactions to a complete halt. This may occur even though there are other transactions which could be processed simultaneously which do not use the same resources as the transaction causing the delay, so that the effect on the databases would be the same regardless of the order in which these particular transactions passed through sync point.

In most cases, it will be relatively rare for two transactions to require access to common resources. Where there are no resources which both transactions require access to, the resulting state of the backup databases will be the same whichever the order in which the transactions are applied. Accordingly, it is possible to maintain parallel application of transactions at the backup site 13 by providing the contingency system apply program 45 with a function which reads the statements in the transactions to be applied, to determine what resources each transaction requires, and then sorts the transactions on the basis of the resources required. This function could ensure that transactions requiring the same resources are never applied simultaneously and are always applied in correct transaction number sequence, while providing the despatcher with sufficient transactions not requiring common resources to ensure that the maximum possible parallelism in application of transactions is maintained.

Such a sorting operation maximises the efficiency with which transactions are applied in the backup site 13. However, it increases the complexity of the contingency system apply program 45, which makes this program more laborious to write and may also increase the time taken to run the program. Any increase in the time taken to run the contingency system apply program 45 reduces the amount of computer time available for the apply process using the APRs 53, removing some of the time saving provided by the sorting operation.

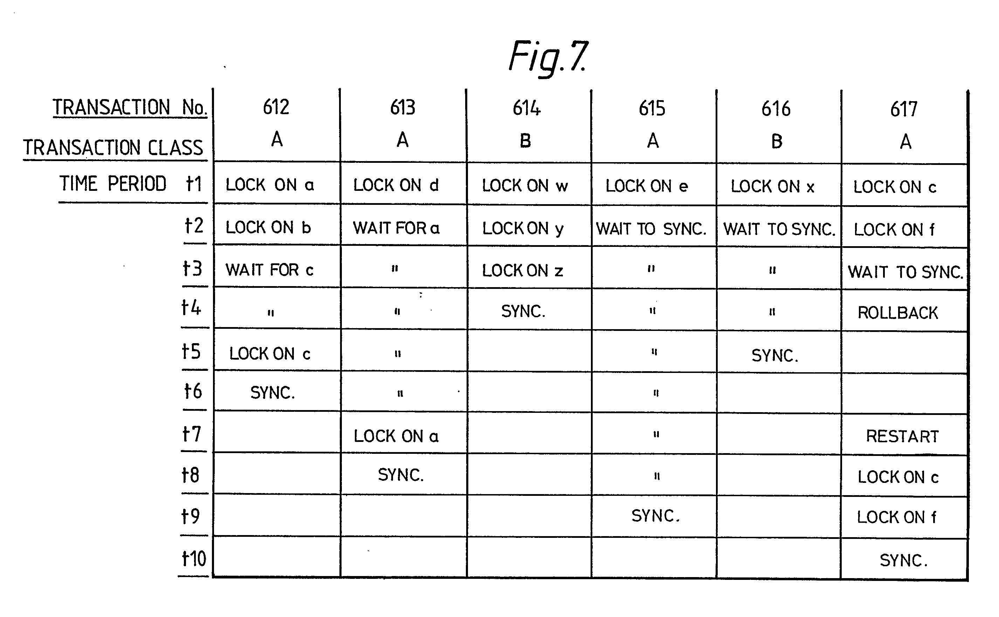

A simpler form of control over the parallel application of transactions in the APRs 53 will now be described with reference to Figure 7. This system will maintain the parallel operation of the APRs 53 near the optimum except in cases where groups of transactions all requiring access to the same resources are very common. In this system, the contingency system apply program 45 reads the statements making up each transaction and classifies them according to the resources they require. Transactions in the same class require access to common resources or a common group of resources, whereas different classes of transactions have no overlap in the resources required so that transactions in different classes may pass through sync point independently of each other. However, no attempt is made to sort the transactions, and they are provided to the despatcher for application to the databases via the APRs 53 in transaction number order.

The contingency system apply program 45 places two restrictions on the application of transactions. First, it will only permit a transaction to pass through sync if all earlier transactions (as defined by transaction number) in the same class have previously passed through sync. However, in determining whether or not a transaction may pass through sync, no account is taken of transactions in other classes. Thus, with reference to Figure 6B, when an APR 53 notifies the contingency system apply program 45 that the final update statement in a transaction has been applied, the contingency system apply program 45 does not instruct the APR 53 to request sync immediately. First, it will check to see if there are any other transactions in the same class which have not yet passed through sync and which must do so before the transaction which is now completed. If this is the case, the completed transaction will have to wait for sync until it is at the head of the transaction number queue for its class.

The second restriction placed on the application of transactions by the contingency system apply program 45 is that when the contingency system apply program 45 instructs an APR 53 to apply an update statement, it requires an acknowledgement from the APR 53 that the update statement has been successfully applied within a predetermined time out period.

The contingency system apply program 45 only monitors this time out period for the next transaction to pass through sync for each class of transactions currently being applied by the APRs 53. Such transactions will be referred to as being at the head of the sync queue for the respective class. If an APR applying a transaction at the head of the sync queue for its class does not confirm that a statement has been applied within the time out period, the contingency system apply program 45 will begin to roll back the other transactions being applied by the other APRs 53. This roll back will start with the most recent transaction to be sent to an APR 53 for application (i.e. the highest number transaction if the transaction numbers are ascending or the lowest number transaction if the transaction numbers are descending), and will roll back each transaction in turn in transaction number order, until the transaction at the head of the sync queue notifies the contingency system apply program 45 that the delayed update statement has now been applied.

Preferably, only transactions in the same class as the delayed transaction are rolled back, but in a simplified form of the contingency system apply program 45, all transactions currently being applied by APRs 53 may be rolled back in transaction number order, regardless of their class.

This roll back provision is necessary for the following reason. Whenever an APR 53 applies an update statement to a database manager, e.g. the DB2 database manager 51, a lock is placed on the relevant resources which prevents all other APRs 53 from having access to those resources. Because a plurality of transactions are being applied in parallel, it is possible for a transaction not at the head of the sync queue for its class to obtain a lock on certain resources, and subsequently for the transaction at the head of the queue to require access to those same resources. This is a deadlock situation, since the transaction which has a lock on the resources will not release the lock until it passes through sync, and it cannot pass through sync until after the transaction at the head of the queue has passed through sync. However, the transaction at the head of the queue cannot pass through sync until all its updates have been applied, and this cannot be done until the lock on the necessary resources has been released.

When an APR 53 applies a transaction to a database manager which requires access to resources from which that APR 53 is locked out, the update cannot be applied by the database manager, and therefore the APR 53 does not report successful application to the contingency system apply program 45 until such time as the lock is released and access to the necessary resources is permitted. Accordingly, if an APR 53 applying a transaction at the head of the sync queue fails to respond within the time out period, this suggests that the APR 53 is locked out from necessary resources. By rolling back the other transactions being processed by the other APRs 53, the contingency system apply program 45 enables the lock on the necessary resources to be removed, enabling application of the transaction at the head of the sync queue to be continued. Transactions are rolled back in order from the transaction most recently sent to an APR 53 for application as this tends on average to minimise the overall delay in application of transactions caused by the rolling back operation.

The manner in which these two restrictions enable control of the parallel operation of the APRs 53 can be seen in Figure 7. In Figure 7, transaction number 612 is the transaction which has been illustrated in Figures 5 and 6. It is at the head of the sync queue for its class. It is being applied in parallel with transactions 613,615 and 617 all of the same class. Additionally, these transactions are being applied in parallel with transactions 614 and 616, which are in the same class as each other but in a different class from the remaining transactions.

In time period t1 the first statement in transaction number 612 is applied, and this transactions obtains a lock on resources a. Similarly, transaction 613 obtains a lock on resources d, transaction 614 obtains a lock on resources w, transaction 615 obtains a lock on resources e, transaction 616 obtains a lock on resources x and transaction 617 obtains a lock on resources c.

In time period t2, transaction 612 obtains a lock on resources b. Transaction 613 requires access to resources a, but cannot obtain them because transaction 612 has a lock on these resources. Accordingly, transaction 613 must now wait for resources a until transaction 612 passes through sync. In the same time period, transaction 614 obtains a lock on resources y. Transaction 615 has completed processing and is ready to pass through sync. However, it is not at the head of the queue for its class and must therefore wait to sync until transactions 612 and 613 have passed through sync. Transaction 616 has also completed application, and must wait to sync until transaction 614 has passed through sync. Finally, in time period t2 transaction 617 places a lock on resources f.

In time period t3, transaction 612 requires access to resources c. However, it cannot obtain this access because transaction 617 has already obtained a lock on these resources. Accordingly, transaction 612 must wait for this lock to be removed. This creates a deadlock situation as described above. During this time period, transaction 613 continues to wait for resources a to become available, and transactions 615 and 616 continue to wait to sync. Transaction 614 obtains a lock on resources z. Transaction 617 has finished processing but must wait to sync until it is at the head of the sync queue for its class.

Because transaction 612, which is at the head of the sync queue for its class, has had to wait for a resource in time period t3, so that the time out interval referred to above has expired, the highest number transaction, i.e. transaction 617, is rolled back in time period t4. At this time period, transaction 614 has completed application. Since it is at the head of the sync queue for its class, it passes through sync. All other transactions are forced to wait in the same manner as during time period t3.

The roll back of transaction 617 during time period t4 releases the locks which transaction 617 had obtained on resources c and f. Accordingly, in time period t5 transaction 612 is able to obtain the lock on resources c for which it has been waiting. During this time period, transaction 613 continues to wait for resources a, and transaction 615 continues to wait to sync. Because transaction 614 passed through sync in time period t4, transaction 616 has now reached the head of the sync queue for its class, and therefore no longer needs to wait to sync. Therefore this transaction passes through sync in time period t5. It does not have to wait for transactions 612, 613 and 615 to pass through sync, since these transactions are in a different class.

At time period t6, transaction 612 has completed application, and passes through sync. This releases the locks it had obtained on resources a, b and c.

In time period t7, transaction 613 is able to obtain access to resources a and obtains a lock on them, following the release of these resources by transaction 612 in time period t6. Because the transaction which had been delayed at the head of the sync queue, transaction 612, has now passed through sync, the rolled back transaction 617 may safely be restarted during period t7. Transaction 615 continues to wait to sync during this period.

At time period t8, transaction 613 has completed its application. Since this transaction is now at the head of the sync queue for its class, it passes through sync. Transaction 615 continues to wait to sync, while restarted transaction 617 once again obtains a lock on resources c.

In time period t9, transaction 615 has reached the head of the sync queue for its class, and passes through sync. During the same time period, transaction 617 obtains a lock on resources f.

At time period t10, transaction 617 has completed application. It is now at the head of the sync queue for its class, and accordingly passes through sync.

The arrangement of Figure 7 illustrates how transactions have to wait for resources they are locked out from, and have to wait to sync for earlier transactions of the same class to pass through sync, but do not have to wait for earlier transactions of different classes. It also illustrates the manner in which a deadlock can occur, and how following the time out interval the deadlock is broken by rolling back the transactions furthest from the head of the sync queue.

In this manner, the contingency system apply program 45 can drive the APRs 53 to apply transactions in parallel, while ensuring that the order in which transactions pass through sync is controlled so that the updates have the same effect on the backup databases as they did on the databases in the production site 11. This identity of effect is maintained even though the operations specified by the update statements may not be commutative, i.e. the statements could have different effects if applied in different orders.

As will be evident from Figure 6, the APRs 53 perform very little processing on the update statements before applying them to the database managers. However, it will normally be necessary to process the statements in the APRs 53 to correct database addresses appearing in the statements.

The programs in the program library at the production site 11, which are used by the dependent regions 21 to process transactions, will have been compiled within the production site system. This compilation will convert virtual addresses appearing in the programs stored in the library into actual addresses within the computer system at the production site 11. In the processing of the statements of a transaction in a dependent region 21, statements applied to the database managers in the production site 11 (and copied to the contingency system program 25) may be created in a form containing actual addresses within the databases.

In the computer system at the backup site 13, the tables in the backup databases will have the same titles as corresponding tables in the production site databases, but the corresponding actual addresses may be different. Accordingly, if any update statements provided to an APR 53 by the contingency system apply program 45 for application to a database manager contain any actual addresses, these actual addresses will be the correct actual addresses for the production site 11, but may not be correct actual addresses in the backup site 13. The APRs 53 use programs from a program library at the backup site, which programs have been compiled against the backup site computer system. The APR 53 must use these programs to convert any actual addresses appearing in update statements into the corresponding actual addresses appropriate for the backup site 13.

## Operation When a Contingency Occurs

When a contingency occurs, and processing at the production site 11 is no longer possible, it is desired to transfer processing to the backup site 13, using terminals (not shown) at the backup site 13. When the database system at the backup site 13 is notified that a contingency has occurred, it will initially deny access to the backup databases, while the contingency system apply program 45 determines whether there are any transactions stored in the logs 37,39 which have not yet been applied to the backup databases.

It will frequently be convenient to divide the data stored in the database system into classes, which are treated independently and are given a priority order. Thus, the database system at the backup site 13 can permit access by terminals to one class of data, for which all updates have been applied, while denying access to another class of data, for which some updates still remain to be applied. If at the moment when a contingency is notified, updates remains to be applied to the backup databases for more than one class of data, priority in the update application may be given to the class of data having highest priority. In this way, access to high priority parts of the database system is provided as quickly as possible.

Once a contingency has been notified, the contingency system apply program 45 immediately applies any update transactions remaining in the logs 37,39 and each class of data is released for access to the terminals once all its update transactions have been applied.

In order to enable normal processing to continue at the backup site 13, it will normally be required that messages from the terminals at the backup site 13 can both read and alter data stored on the backup databases, once access to the data has been permitted. Any updates made to the backup databases during contingency operation will cause the backup databases to contain data different from that stored in the production site databases. Accordingly, in this mode of operation the backup site is operated with a contingency system program similar to the contingency system program 25 at the production site 11, and copies of all update statements applied to the backup databases during contingency processing are stored on either the log 37 at the backup site 13 or the log 39 at the tracking site 15.

When operation is resumed at the production site 11, these logged transactions are used to update the production site databases in a manner similar to that previously described for the backup site databases. Once the production site databases have been brought to a state in which they store data identical with that stored at the backup site 13, processing can be transferred back from the backup site 13 to the production site 11, and the backup site 13 reverts to the backup mode as previously described.

When the database system at the production site 11 is restarted, any partially processed transactions which were not committed when the contingency occurred are backed out, since such transactions will not have been logged at the backup site 13, and therefore will not have been applied to the backup databases. If the production site 11 failed during the commit procedure for a transaction, and it is not clear whether that transaction was logged at the backup site 13, this doubt can be resolved by checking the transaction number of the transaction in question against the transaction numbers which were logged at the time when the contingency was declared at the backup site 13. If the transaction was successfully logged, and then applied to the backup databases, it is committed at the production site, whereas if the transaction was not logged and so was not applied at the backup site 13, the transaction is backed out before the production site system begins the application of transactions processed at the backup site 13 while the production site 11 was out of operation.

As mentioned above, the contingency arrangement may provide a backup for all data stored in the database system at the production site 11. Alternatively, in order to save costs or to reduce the time taken by the apply process at the backup site 13, only certain classes of data, considered essential for the continued operation of the concern running the database system, may be backed up.

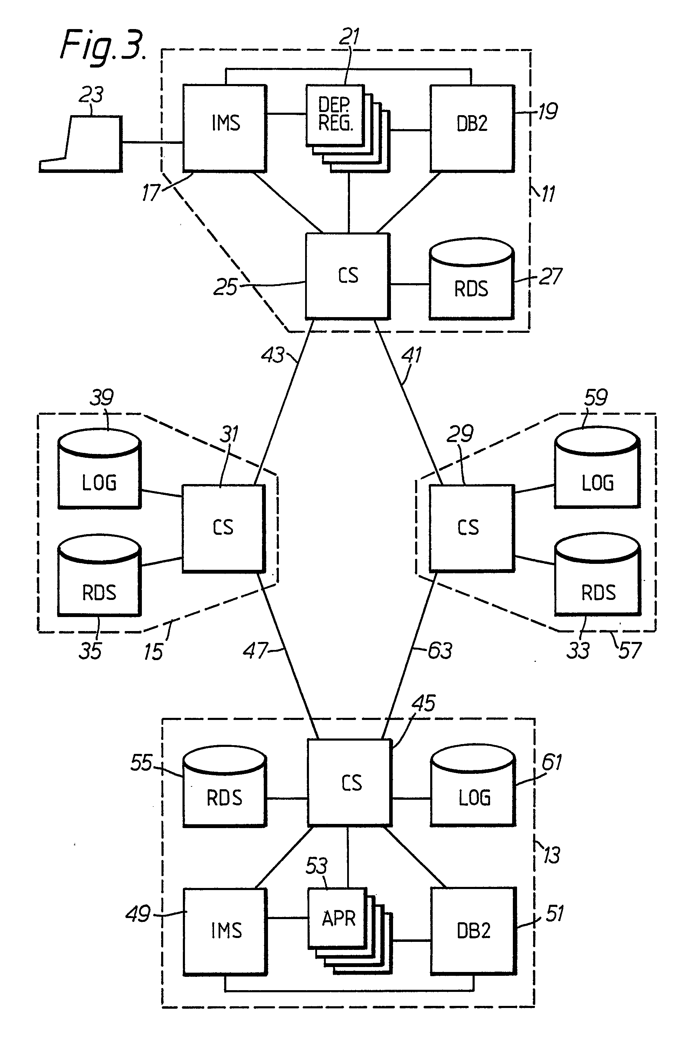

Figure 3 shows a contingency arrangement embodying the present invention which is generally similar to that of Figure 2. However, in the embodiment of Figure 3 both the primary and the secondary tracking operations take place at separate sites from the production site 11 and the backup site 13. Accordingly, in the arrangement of Figure 3 there is a primary tracking site 57 to which transaction information is normally sent by the production site contingency system 25. The primary contingency system tracking program 29 is at the primary tracking site 57. Since this program is no longer running at the same site as the contingency system apply program 45, they cannot share a log. Accordingly, a log 59 is provided at the primary tracking site 57, for use by the primary contingency system tracking program 29, and a further log 61 is provided at the backup site 13 for use by the contingency system apply program 45. These two logs 59,61 replace the backup site log 37 in the embodiment of Figure 2.

In the embodiment of Figure 3, the contingency system apply program 45 will not have direct access to any log on which transaction data is stored during the tracking operation. Accordingly, a replay operation, similar to that previously described with respect to the tracking site 15, must be performed by the primary contingency system tracking program 29 at the primary tracking site 57. In this replay operation, transaction data logged at the primary tracking site 57 is transmitted to the backup site 13 over a communication channel 63.

Apart from the differences referred to above, the embodiment of Figure 3 is the same as the embodiment of Figure 2, and the description already given of Figure 2 applies to Figure 3 in a corresponding manner.

In Figures 2 and 3, arrangements are shown in which there is only one DB2 database manager at each of the production site 11 and the back-up site 13. It is possible to provide an arrangement having several DB2 database managers at each of these sites. Each DB2 database manager would be associated with a respective production site contingency system 25 or contingency system apply program 45. In this case, there might be no contingency provision for the DL1 database manager associated with the IMS transaction manager 17.

Figures 2 and 3 have been described in terms of embodiments which do not apply updates to the backup databases in real time, i.e. they store the updates and apply them to the backup databases at a time later than the time at which the original transactions were processed at the production site 11. However, it will be apparent to those skilled in the art that the embodiments of Figures 2 and 3 could be modified so that transaction update information is applied at the backup site 13 as soon as it is transmitted by the production site contingency system 25.

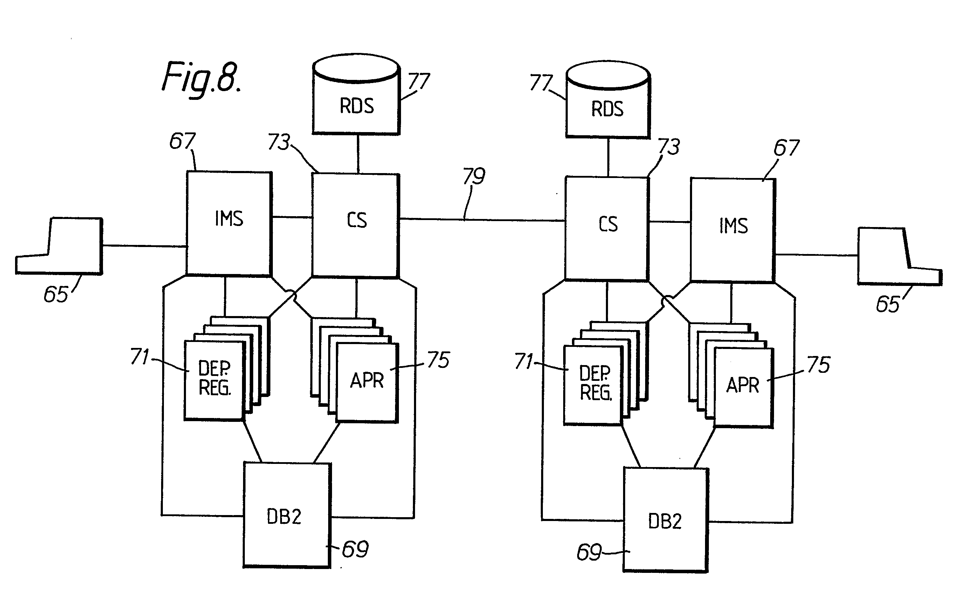

An embodiment providing real time data replication is described with reference to Figure 8.


Other Embodiments

The embodiments described with reference to Figures 2 to 7 relate to contingency arrangements. However, the present invention also has application to other situations in which it is desired to provide communication out of a computerised database system.

Figure 8 illustrates an arrangement having two identical database systems, one containing a replica of the data stored in the other, but unlike the embodiments of Figures 2 to 7 processing may take place on both systems simultaneously. As will be explained below, the structure shown schematically in Figure 8 can also apply to an arrangement of linked databases or a distributed database, in which there is more than one transaction manager and a terminal linked to the transaction manager in one system can access a database in the other system through that transaction manager.

In the replicated database arrangement with simultaneous processing shown in Figure 8, each database system is slightly different from the systems shown in Figures 2 and 3. Each database system has a plurality of terminals 65 which provide messages to an IMS transaction manager 67. Each system has a DB2 database manager 69 driven directly by its local IMS transaction manager 67, by means of a plurality of dependent regions 71. Additionally, each database system has a communications system 73, generally similar to the contingency system programs 25 and 45 in the embodiments of Figures 2 and 3. Each communications system 73 appears to its local IMS transaction manager 67 to be an associated resource manager.

When the dependent regions 71 process transactions, they communicate details of the transactions to the communications system 73 in the same manner as the production site contingency system 25 of Figures 2 and 3. These transaction details are transmitted to the other database system. Each communication system 73 also receives details of transactions from the other database system, and applies this information to its local databases through a plurality of apply process regions 75, in a manner similar to that of the contingency system apply program 45 of Figures 2 and 3. Each communication system 73 is associated with an RDS store 77. The communications systems 73 communicate with each other over a communication link 79.

In operation, a message from a terminal 65 is sent to its local IMS transaction manager 67, where it is passed to a dependent region 71 for processing in the manner already described. The calls made by the dependent region 71 to the DB2 database manager 69 or the DL1 database manager associated with the IMS transaction manager 67 are also notified to the communications system 73, which passes them to the other database system over the communication link 79. In the other database system, these calls are immediately applied to the corresponding replica database via an APR 75. In this way, as soon as resources are used by a dependent region 71 in one of the database systems, the corresponding resources in the other database system have a lock applied to them to prevent any transaction originating in the other database system from obtaining access to these resources.

When the processing of a transaction by a dependent region 71 is completed, its local IMS transaction manager 72 performs a two-phase commit operation, which involves the local communications system 73. The communications system 73 ensures that all update statements have been transferred to the other database system before its votes "yes" to commit. It will also instruct the communications system 73 in the other database system to request commit.

The commit operations in the two database systems take place independently of each other. The communications system 73 in the second database system will ensure that all updates for the transaction in question have been applied to its local databases through an APR 75, and will then instruct the APR 75 to request the local IMS transaction manager 67 to commit. This commit procedure may take place slightly later than the commit procedure at the database system where the transaction originated. However, since the locks in a given database system are not released until that system passes through the commit process, the only effect of a slight lack of synchronisation between two commit processes is a slight delay before previously locked resources become available again.

This procedure prevents a terminal at one database system from obtaining access to data from its local databases which is inconsistent with the data stored in the other database system. In this way, the arrangement maintains a real time replication of databases with processing in both systems.

As mentioned above, the arrangement of Figure 8 can also illustrate a distributed database arrangement or a linking between two different database systems. In this case, the data stored in the two database systems is different. As previously mentioned, the communications system 73 appears to the IMS transaction manager 67 to be a resource manager associated with it. In this case, the communications system 73 can be treated as a further database manager.

Accordingly, when a message is being processed by a dependent region 71, a call may be directed to an address within the database managed by the DL1 database manager associated with the local IMS transaction manager 67, to an address within the database managed by the local DB2 database manager 69, or to an address apparently within an apparent database managed by the communications system 73. In fact, calls addressed to the communications system 73 will be shipped to the other database system.

In each database system, calls received by the communications system 73 from the other database system are applied to the appropriate local database through an APR 75. The values returned by the database to the APR 75 are then passed back to the communications system 73 and shipped back to the originating database system. Within the originating database system, the returned values are received over the communication link 79 between the database systems are provided to the dependent region 71 as if the local communications system 73 was a database manager. Thus, the action of the communications system 73 is to bring the databases of one database system inside the other database system so far as it appears to the IMS transaction manager 67 of that other database system. In this way, the IMS transaction manager 67 is enabled to communicate with a remote database, even though this is not normally within the capabilities of this program.

A particularly valuable effect of this arrangement is that a dependent region 71 can request information from a remote database via the local communications system 73, and receive the requested information in the same sync interval. This enables the dependent region 71 to use information from a remote database in combination with information from a local database, e.g. by adding the two values together. It also enables the dependent region 71 to incorporate information from a remote database in the return message back to the terminal originating the request, so that the information can be presented by the terminal in a convenient and comprehensible manner.

An arrangement is known for use with IMS, called Multiple Systems Coupling (MSC). MSC permits one IMS program to communicate with another IMS program (but not with other types of transaction manager). However, the communications process takes several sync intervals between the processing in a dependent region of the transaction requiring the communication and the receipt of the reply from the remote database system. Therefore, the dependent region cannot use the reply information. Instead it has to be passed unprocessed to the originating terminal. Since the originating terminal may have been used for other transactions in the meantime, an operator may find that the reply information appears on the terminal screen without any indication of which operator request it is a reply to.

In the Figure 8 arrangement, when a resource is accessed through an APR 75, a lock is placed on the resource in the normal way, and this avoids any problems which might otherwise arise if transactions being processed within the two data base systems both sought access to the same resources.

When one of the data base systems passes through a commit procedure, its local communication system 73 will be involved if it has been called in this transaction. However, it will not normally be possible for the remote data base manager in the other data base system, which has been accessed through the communication system 73, to participate in the commit process. Instead, the commit process follows the arrangements already described above with reference to other embodiments. The local communication system 73 participates in the two-phase commit, and ensures that all update statements have been shipped out to the other data base system. It then instructs the other data base system to perform a commit operation. The communication system 73 in the remote data base system applies all the updates through an APR 75 and then it instructs the APR to request sync. The updates are then committed in the remote data base system.

Since the local communication system 73 will not vote "yes" following a "commit prepare" instruction until it receives a "yes" vote from the other communication system 73 over the communications link 79, there is a guarantee that at the time of commit in the local data base system all update statements have been provided to the remote data base system and are ready to be committed. However, the updates in the remote data base system are not actually committed during the local data base system commit process, and instead by voting "yes", the two communication systems 73 in effect undertake jointly to ensure that the updates are committed in the remote data base system.

The arrangement described above has significant advantages. Many organisations have two separate data base systems, each holding data of interest to the organisation, which systems are incompatible and cannot communicate with each other. However, it may frequently be the case that an individual in the organisation needs to access data on both systems, and correlate that data, in order to carry out some item of business. For example, in a bank, account information may be held in a first data base in a first system, while a second data base running in an incompatible system may be used to support automatic teller machines. Normally, data relating to automatic teller machine transactions will be transferred to the accounts data base after close of business, so as to update the account information. This means that during the course of the day, the account information on the accounts data base does not take into account any automatic teller machine transactions which may have been carried out during that day.

Under certain circumstances, for example, when an account is being closed, a bank cashier will need to know the complete present status of an account, and accordingly the cashier must access both the accounting data base and the automatic teller machine data base. If these data bases are incompatible, then the two access operations must either be carried out on two different terminals or alternatively the cashier must access one data base, then disconnect the terminal from that data base and connect it to the other data base to access that. Such operations are laborious and inconvenient, and also have the consequence that the values read out of the two data bases cannot both be displayed simultaneously on the same screen. By means of a system as just described with reference to Figure 8, the cashier can use one terminal which continues to be connected to the same transaction manager, and by means of that single terminal can access both data bases either in one transaction or as successive transactions without having to log off from the transaction manger in between transactions.

So far, embodiments of the present invention have been described entirely with reference to environment of an IMS transaction manager as provided by the IBM organisation. However, it will be appreciated that equivalent communications and contingency systems could be provided within the environment of other transaction managers provided by the IBM organisation, and also with the environments provided by other computer organisations.

If the communications over the communication links 41, 43, 47, 79 make use of a widely acceptable communication protocol, such as OSI or LU6.2, computers of different manufacturers can be connected together. If the message protocol used by the communications or contingency systems and superimposed on the communication protocol is open and easily usable by other systems, the entire communications protocol can be rendered sufficiently open to be used with a variety of other systems. In this case, a communications function embodying the present invention and communicating over a communications link may not be connected to another similar communications function at the far end of the communications link. Instead, any of a wide range of devices could be connected including an appropriately programmed personal computer. For this to be possible, it is preferable for the message protocol to define the data base operations in logical terms, and the message protocol could be a version of Structured Query Language, which is widely known and used.

It will be appreciated by those skilled in the art that the embodiments described above are merely examples of ways in which the present invention could be used, and many variations and other arrangements are possible.

## Claims

1. A computerised database system having a transaction manager and a communications function, the communications function being arranged so as to resemble to the transaction manager a resource manager associated with it, and the communications ·function being able to transmit data out of the database system which data defines statements supplied to the communications function from within the database system.

2. A computerised database system having a transaction manager and a communication's function, the communications function appearing to the transaction manager to be a resource manager.

3. A database system according to claim 1 or claim 2, in which the communications function does not include a database management system.

4. A database system according to any one of claims 1 to 3, which further comprises a database management system drivable by the transaction manager other than through the communications function.

5. A database system according to any one of claims 1 to 4, in which the communications function communicates outside the database system using an OSI or LU 6.2 protocol.

6. A database system according to any one of claims 1 to 5, in which the communications function appears to the transaction manager to be a database manager.

7. A database system according to any one of claims 1 to 6, in which the communications function participates in a multi-phase commit procedure with the transaction manager.

8. A method of enabling a computerised database system to communicate with an otherwise incompatible system, in which a communications function is provided which appears to the database system to be a resource manager within the database system.

9. A method according to claim 8, in which the communications function does not include a database manager.

10. A method according to claim 8 or claim 9, in which the communications function communicates outside the database system using an OSI or LU 6.2 protocol.

11. A method according to any one of claims 8 to 10, in which the communications function appears to the database system to be a database manager.

12. A method according to any one of claims 8 to 11, in which the communications function participates in a multi-phase commit procedure in the database system.

13. A computerised database system in which data stored in a first database or group of databases can be accessed and altered, the system further comprising a second database or group of databases physically remote from the first, the contents of the second database or group comprising, at a first time, a copy of all or at least a predetermined subset of the contents of the first database or group, and data defining changes to all or at least the said predetermined subset of the contents of the first database or group of databases, which changes are applied to the first database or group of databases after the said first time, are provided to a part of the system physically remote from the first database or group of databases, the said data defining the changes being provided to the said physically remote part of the system no later than the instant at which the changes to the contents of the first database or group of databases become irrevocable, the data defining the changes being used to update the said copy contents of the second database or group of databases by making corresponding changes in the contents of the second database or group of databases.

14. A system according to claim 13, in which the said physically remote part is, at least under a predetermined set of circumstances, also physically remote from the second database or group of databases.

15. A system according to claim 14, in which under a first predetermined set of circumstances the said physically remote part of the system is a first part, which is not physically remote from the second database or group of databases, and under a second predetermined set of circumstances is a second part, which is physically remote from the second database or group of databases.

16. A system according to any one of claims 13 to 15, in which the said data defining changes is stored at the said physically remote part of the system, and is used to update the second database or group of databases after the said changes have been made to the contents of the first database or group of databases.

17. A system according to claim 13, in which the said corresponding changes are made to the contents of the second database or group of databases substantially simultaneously with the making of the said changes to the contents of the first database or group of databases.

18. A system according to any one of claims 13 to 17, in which the said first database or group of databases is controlled by a database manager, and the said changes or data defining the said changes is initially supplied to the database manager, and subsequently the database manager participates in a commit process in which it makes the said changes to the first database or group of databases and if it cannot make the said changes the commit process is aborted, the said physically remote part of the system also participating in the commit process so that if the said physically remote part does not successfully receive and store data defining the changes the commit process is aborted and the changes are not made in the first database or group of databases.

19. A method of operating a computerised database system in which data defining a copy of at least a predetermined part of the database or enabling a copy of at least a predetermined part of the database to be created is stored at a location, or jointly at a plurality of locations, physically remote from the said database and is updated no later than the time when a corresponding change is committed to the database.

20. A method according to claim 19, in which data defining a copy of at least a predetermined part of the database is stored at a location or jointly at a plurality of locations remote from the database, and data defining changes to the said at least a predetermined part of the database is stored at a said location or jointly at a plurality of said locations no later than the time when a corresponding change is committed to the database, and the said data defining changes is used to update the said data defining a copy at a time later than the said time.

21. A method according to claim 19 or claim 20, in which data defining a copy of at least a predetermined part of the database is stored at a first location physically remote from the said database, and at least under a predetermined set of circumstances data defining changes to the said at least a part of the database are stored at a second location physically remote from the said database and from the said first location.

22. A method according to claim 21, in which under a first predetermined set of circumstances the said data defining changes is stored at the first location and under a second predetermined set of circumstances the said data defining changes is stored at the second location.

23. A method according to claim 19, in which data defining a copy of at least a predetermined part of the database is stored at a location or jointly at a plurality of locations physically remote from the said database and is updated substantially simultaneously with the committing of corresponding changes to the said database.

24. A method according to any one of claims 19 to 23, in which data defining changes to the said database are provided to a system at the or a said location, which system participates in a commit process by which the changes are committed to the database.

25. A method according to claim 24, in which the said commit process is a multi-phase commit process.

26. A computerised database system in which data defining changes to a database having a database manager is transmitted out of the system, so as to enable an up-to-date copy of at least a predetermined part of the database to be maintained outside the system, and in which the function which transmits the data out of the system participates in a commit procedure in the system as a resource manager other than the database manager and transmits the data out of the system before the completion of the commit procedure.

27. A database system according to claim 26, in which the commit procedure is a multi-phase commit procedure.

28. A database system according to claim 27, in which the data is transmitted out of the system before the system enters the final phase of the commit procedure.

29. A database system according to any one of claims 26 to 28, in which the data is transmitted to a second system and when the function which transmits the data out of the system participates in a commit procedure in the system, it causes the second system to undergo a commit procedure in respect of the transmitted data.

30. A computerised database system in which data defining changes to a database within the system is transmitted over a communications channel to another system, and the changes are not made to the database unless an acknowledgement of the transmitted data is received and if the changes are not made to the database the other system is informed.

31. A method of operating a computerised database system in which data defining changes to a database within the system is transmitted over a communications channel to another system, and the changes are not made to the database unless an acknowledgement of the transmitted data is received and if the changes are not made to the database the other system is informed.

32. A database system according to claim 30 or a method according to claim 31, in which the said data is transmitted by a communications function which participates in the process of making the changes to the database.

33. A database system according to claim 30 or claim 32 or a method according to claim 31 or claim 32, in which the process of making the changes to the database comprises a multi-phase commit process.

34. A database system or a method according to claim 33, in which the said data is received by the other system before the beginning of the final phase of the commit process.

35. A database system or a method according to claim 33 or claim 34, in which the other system participates in a phase of the commit process.

36. A database system according to claim 30 or any one of claims 32 to 35 or a method according to any one of claims 31 to 35, in which the process of making the changes to the database includes sending an instruction to the other system to commit the data.

37. A communications function for a computerised database system, which transmits out of the system data defining changes to a database within the system, the communications function participating in database commit procedures in the system so as to be able to prevent the committing of changes to the database, the communications function transmitting the said data out of the system before the end of the commit procedure which commits to the database the changes defined by the data.

38. A communications function according to claim 37, which transmits a commit instruction out of the database system when it receives a commit instruction from within the database system.

39. A communications function according to claim 38, which responds to a message received from outside the system vetoing a commit procedure, by vetoing a commit procedure within the system.

40. A communications function according to any one of claims 37 to 39, which participates in multi-phase commit procedures in the database system and transmits the said data out of the system before the beginning of the final phase of the commit procedure which commits to the database the changes defined by the data.

41. A distributed database system having more than one transaction manager, in which a first transaction manager drives a respective database manager directly and a communications function is provided which allows a second transaction manager to communicate with the said database manager, so as to permit the second transaction manager to send a request to the database manager and receive a reply in the same sync interval.

42. A distributed database system according to claim 41, in which the first and second transaction managers are different from each other.

43. A distributed database system having more than one transaction manager, in which a first transaction manager drives a respective database manager directly and a communications function is provided which allows a second transaction manager, which is different from the first transaction manager, to communicate with the said database manager.

44. A distributed database system according to claim 42 or claim 43, in which the second transaction manager is of a type which cannot drive directly database managers of the type to which the database manager drivable directly by the first transaction manager belongs.

45. A distributed database system according to any one of claims 41 to 44, in which the communications function appears to the second transaction manager to be a resource manager directly drivable by the second transaction manager.

46. A distributed database system according to claim 45, in which the communications function appears to the second transaction manager to be a database manager.

47. A distributed database system according to any one of claims 41 to 46, in which the second transaction manager drives a respective database manager directly, and the communications system allows the first transaction manager to communicate with the said database manager driven directly by the second transaction manager.

48. A distributed database system according to claim 47, in which the communications function appears to the first transaction manager to be a resource manager drivable directly by the first transaction manager.

49. A distributed database system according to claim 48, in which the communications function appears to the first transaction manager to be a database manager.

50. A distributed database system according to any one of claims 47 to 49, in which the said respective database managers, drivable directly by the first and second transaction managers respectively, are different from each other.

51. A computerised database system having a transaction manager and a communications function which communicates outside the database system using a protocol which defines database operations in logical terms so as to permit an operation specified using the protocol to be applied to more than one type of database manager.

52. A database system according to claim 51, in which the protocol comprises a version of Structured Query Language.

53. A computerised database system having a transaction manager and a function which appears to the transaction manager to be a resource manager, the function managing resources outside the system.

*Fig.1.*

Fig.2.

*Fig.3.*

# Fig.4.

```
SET TRANSACTION
FLAG IF CS IS
INTERESTED IN
THIS TRANSACTION
```

```
NEXT STATEMENT
```

IS THIS A CS STATEMENT ? → NO

YES

```
SET STATEMENT
FLAG. CALL
DFSESPRO FOR CS
```

```
RETURN CONTROL TO
DEPENDENT REGION
```

```
CALL DFSESPRO
FOR DB2
```

END OF TRANSACTION ? → NO

IS STATEMENT FLAG SET ? → NO

YES

```
CALL DFSESPRO
FOR CS. DISCARD
STATEMENT FROM CS
IF NOT SUCCESSFUL
```

```
ENTER COMMIT
PROCEDURE
```

## Fig.5a.

IMS    ~17    DEP.'REG.    ~21    19~    DB2    25~    CS

MESSAGE

MESSAGE

"DB2 CALLED"    LOAD PROGRAM    "READ a"

LOCK a

CONTENTS OF a    READ a

"CS CALLED"    PROCESS MESSAGE    "a:= a × 1·05"

STORE STATEMENT

PASS CONTROL

UPDATE a    PASS CONTROL

CHECK FOR SUCCESS

PASS CONTROL

"READ b"

LOCK b

CONTENTS OF b    READ b

"b:= b × 1·06"

STORE STATEMENT

PASS CONTROL

EP 0 394 019 A2

IMS     DEP. REG.     DB2     CS     *Fig.5b.*

—17    21—    19—    25—

UPDATE b

PASS CONTROL

PASS CONTROL

CHECK FOR SUCCESS

"c: = a + b"

PASS CONTROL

STORE STATEMENT

LOCK c

UPDATE c

PASS CONTROL

CHECK FOR SUCCESS

PASS CONTROL

REPLY MESSAGE

END PROCESSING MESSAGE

REQUEST SYNC.

"COMMIT PREPARE"

"COMMIT PREPARE"

WRITE BUFFERS TO DISK AND PREPARE TO COMMIT

TRANSMIT STORED STATEMENTS

INSTRUCT COMMIT PREPARE

VOTE

VOTE

VOTE

EP 0 394 019 A2

## Fig.5c.

IMS    17      21   DEP. REG.      DB2   19      25    CS

"COMMIT CONTINUE"

"COMMIT CONTINUE"

DELETE
OLD VALUES
FROM
BUFFERS
RELEASE
LOCKS

INSTRUCT
LOGGING
OF
STATEMENTS

"COMMIT COMPLETED"

"COMMIT COMPLETED"

"LOGGED"

REPLY
MESSAGE

EP 0 394 019 A2

# Fig.6a.

| CS | ~45 | 53~ | APR | | DB2 | ~51 | 49~ | IMS |
|---|---|---|---|---|---|---|---|---|

"a:= a × 1:05" →

"a:= a × 1·05" →  ·······  "DB2 CALLED" →

LOCK a

← "DONE"  UPDATE a

← "DONE"

"b:= b × 1·06" →

"b:= b × 1·06" →

LOCK b

← "DONE"  UPDATE b

← "DONE"

"c:= a+b" →

"c:= a+b" →

LOCK c

← "DONE"  UPDATE c

EP 0 394 019 A2

# Fig.6b.

CS — 45 — 53 — APR — DB2 — 51 — 49 — IMS

"DONE"

"REQUEST SYNC"

REQUEST SYNC

"COMMIT"

DELETE
OLD VALUES
FROM
BUFFERS.
RELEASE
LOCKS

"COMMIT COMPLETED"

"SYNC SUCCESSFUL"

"SYNC SUCCESSFUL"

REMOVE
COMPLETED
TRANSACTION
FROM QUEUE,
SEND NEXT
TRANSACTION
TO
DISPATCHER.

EP 0 394 019 A2

# Fig.7

| TRANSACTION No. | 612 | 613 | 614 | 615 | 616 | 617 |
|---|---|---|---|---|---|---|
| TRANSACTION CLASS | A | A | B | A | B | A |
| TIME PERIOD t1 | LOCK ON a | LOCK ON d | LOCK ON w | LOCK ON e | LOCK ON x | LOCK ON c |
| t2 | LOCK ON b | WAIT FOR a | LOCK ON y | WAIT TO SYNC. | WAIT TO SYNC. | LOCK ON f |
| t3 | WAIT FOR c | " | LOCK ON z | " | " | WAIT TO SYNC. |
| t4 | " | " | SYNC. | " | " | ROLLBACK |
| t5 | LOCK ON c | " | | " | SYNC. | |
| t6 | SYNC. | " | | " | | |
| t7 | | LOCK ON a | | " | | RESTART |
| t8 | | SYNC. | | " | | LOCK ON c |
| t9 | | | | SYNC. | | LOCK ON f |
| t10 | | | | | | SYNC. |

EP 0 394 019 A2

*Fig.8.*

EP 0 394 019 A2